# EUROPEAN PATENT SPECIFICATION

(11) **EP 3 914 441 B1**
(45) Date of publication and mention of the grant of the patent: **01.03.2023**
(21) Application number: 20702170.0
(22) Date of filing: 22.01.2020
(51) Int. Cl.: B29D 30/06

(54) **APPLICATION SYSTEM AND METHOD FOR APPLYING A SEALING AGENT TO THE INNER SURFACE OF A PNEUMATIC TYRE**
APPLIKATIONSSYSTEM UND VERFAHREN ZUM AUFBRINGEN EINES DICHTMITTELS AUF DIE INNENFLÄCHE EINES LUFTREIFENS
SYSTÈME D'APPLICATION ET PROCÉDÉ D'APPLICATION D'UN AGENT D'ÉTANCHÉITÉ SUR LA SURFACE INTERNE D'UN PNEU

(30) Priority: 25.01.2019 IT 201900001147
(43) Date of publication of application: 01.12.2021
(73) Proprietor: Bridgestone Europe NV/SA, 1932 Zaventem (BE)
(72) Inventor: PONTONE, Roberto, 00128 Roma (IT)
(74) Representative: Marchetti, Alessio
(86) International application number: PCT/IB2020/050484
(87) International publication number: WO 2020/152593

(56) References cited:
- US-A- 4 359 354
- US-A1- 2003 150 544
- US-A1- 2013 087 259

## Description

### TECHNICAL SECTOR

The present invention relates to an application system and method for applying a sealing agent to the inner surface of a pneumatic tyre.

### PRIOR ART

In recent years pneumatic tyre development has been directed towards pneumatic tyres with an inner lining that is manufactured with a sealing agent that is intended to seal any punctures. Normally, the sealing agent has a high viscosity in order to ensure both a sealing action in relation to any holes and its stability within the inner cavity regardless of the conditions of the pneumatic tyre.

The sealing agent is applied to a pre-vulcanized pneumatic tyre in the area of the pneumatic tyre that comes into contact with the road (i.e. the area of the pneumatic tyre wherein punctures can potentially occur). In particular, the sealing agent is applied at the tread and partially at the sidewalls.

In a known sealing agent application system, such as that described, for example, in the patent applications EP0080968A1 and JP2014217953A1 or else in the patent US4398492A1, a sealing agent applicator device is inserted into the already vulcanized pneumatic tyre; the applicator device comprises an arm which is movable axially and supports at one end a dispensing head wherefrom a strip of sealing agent emerges. The pneumatic tyre is rotated upon itself (typically by means of the motorized rollers whereupon the pneumatic tyre rests) and the dispensing head carried by the arm is moved axially from one side of the pneumatic tyre to the opposite side of the pneumatic tyre in order to deposit upon the inner surface a spiral of sealing agent that covers the inner surface itself (i.e., the application of the sealing agent has a helical progression).

It has been observed that to control the dispensing of the sealing agent, the rotation of the pneumatic tyre, and the continuous axial displacement of the dispensing head such as to obtain the constant annular overlapping of the strip of sealing agent which is wound helically in a coordinated manner is complicated; in other words, in applying a single continuous strip (i.e., seamless) of sealing agent having a helical shape, irregularities can form that have a circumferential progression at the overlapping areas of the strip of sealing agent.

To increase the uniformity of the strip of sealing agent deposited upon the inner surface of the pneumatic tyre, it has been proposed not to apply a single continuous strip (i.e., seamless) of sealing agent having a helical shape, but to apply a plurality of circular strips of sealing agent that are independent of each other and arranged side by side; in other words, the dispensing head is not moved axially and continuously during the dispensing of the sealing agent and instead the dispensing head is held stationary during the dispensing of the sealing agent and is moved axially only between the end of the application of a strip of sealing agent and the start of the application of the next and adjacent strip of sealing agent.

However, it has been observed that known sealant agent application devices have non-negligible dispensing inertia, and, therefore, at the beginning of the dispensing, a relatively long period of time is required (approximately 0.8 - 1.2 seconds) in order to obtain from zero a nominal flow rate, and, similarly, at the end of the dispensing a relatively long period of time is required (approximately 0.4 - 0.6 seconds) in order to reduce the flow rate to zero. In other words, due to the characteristics of the sealing agent and the characteristics of the extruder device used, every time the extrusion is started and stopped a significant change in the flow rate of the sealing agent occurs, due to the inertia of the extrusion process, with the subsequently less controlled application of the sealing agent in terms of thickness, uniformity and the area covered. High dispensing inertia inevitably involves the formation of irregular thicknesses (i.e., the formation of non-uniformities) within the *"closure"* areas of the strips of sealing agent (i.e., within those areas wherein the end of the strip of sealing agent overlaps the beginning of the strip of sealing agent in order to complete the same circular strip of sealing agent).

Consequently, in applying a plurality of circular strips of a sealing agent that are independent of each other and arranged side by side, irregularities can form having an axial progression at the *"closure"* areas of the strips of sealing agent.

US2003150544 discloses a self-seal tire having a puncture sealing layer located all over a tire inner wall surface from one shoulder portion to the other shoulder portion of a pneumatic tire. The puncture sealing layer comprises at least one band-shape seal layer, which includes a band-shape sponge layer and a bonding layer, the band-shape sponge layer being impregnated with an adhesive so that it is exposed on a tier wall surface side face of the band-shape sponge layer and spaced apart from a tire counter wall surface side face thereof, the bonding layer being made of adhesive and provided on the tire wall surface side face. The band-shape seal layer is bonded through the bonding layer on the tire inner wall surface with the band-shape seal layer being wound in a circumferential direction of the tire.

### DESCRIPTION OF THE INVENTION

The object of the present invention is to provide an application system and method for applying a sealing agent to the inner surface of a pneumatic tyre, which application system and method are free of the drawbacks described above and that, in particular, are of easy and economical manufacture.

According to the present invention an application system and method for applying a sealing agent to the inner surface of a pneumatic tyre are provided, according to what is set forth in the attached claims.

The claims describe preferred embodiments of the present invention forming an integral part of the present description.

### BRIEF DESCRIPTION OF THE DRAWINGS

The present invention will now be described with reference to the attached drawings, illustrating, but not limited to, an exemplary embodiment, wherein:
- Figure 1 is a schematic side view, with parts removed for clarity, of an application system manufactured in accordance with the present invention;
- Figure 2 is a schematic front view, with parts removed for clarity, of the application system of Figure 1;
- Figure 3 is a graph showing the evolution over time of some flow rates of sealing agent dispensed during use by the application system of Figure 1; and
- Figure 4 is a block diagram which describes the control logic implemented within a control unit of the application system of Figure 1.

### PREFERRED EMBODIMENTS OF THE INVENTION

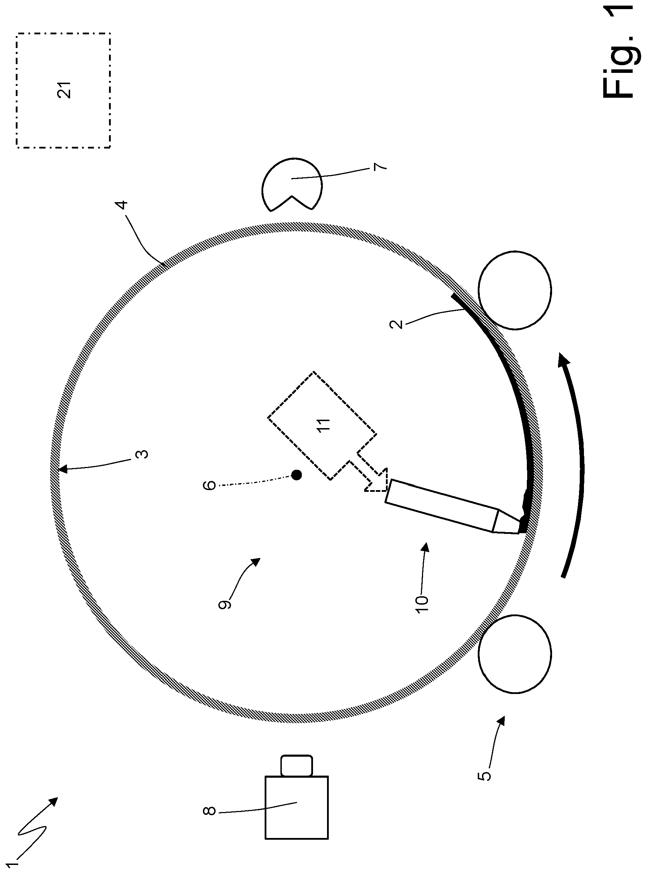

In Figure 1, the numeral 1 denotes, in the entirety thereof, an application system 1 for the application of a sealing agent 2 to (at least) part of the inner surface 3 of a pneumatic tyre 4. In other words, the pneumatic tyre 4 has a toroidal shape bounded by an outer surface and by the inner surface 3 opposite the outer surface and the sealing agent 2 is applied to (at least) part of the inner surface 3; generally, the sealing agent 2 is applied to the inner surface 3 arranged at the tread and to part of the inner surface 3 arranged at the lateral parts (i.e., within those areas where punctures may normally occur).

The application system 1 comprises a support device 5 which is suitable for supporting the pneumatic tyre 4 arranged in a vertical position and is also suitable for bringing the pneumatic tyre 4 into rotation around an axis of rotation 6 coinciding with the central axis of symmetry. Normally, the support device 5 comprises side rails (not illustrated) which hold the pneumatic tyre 4 stable in the vertical position and comprises motorized rollers (illustrated schematically) whereupon the pneumatic tyre 4 rests and is driven.

The application system 1 comprises a position sensor 7 which is suitable for determining the angular position of the pneumatic tyre 4 around the axis 6 of rotation; the position sensor 7 may, for example, be an angular encoder coupled to one of the motorized rollers of the support device 5, or else the position sensor 7 may directly read the displacement of the pneumatic tyre 4.

The application system 1 comprises a camera 8 which faces the outer surface of the pneumatic tyre 4 at a side wall and is suitable for reading a graphical identification code (typically a bar code or similar) which is applied to the same side wall; in pneumatic tyres 4, the graphical identification code is always applied in the same position (also in the same angular position), and, therefore, when the camera 8 detects the presence of the graphical identification code, the corresponding angular position is contextually determined of the pneumatic tyre 4 around the axis 6 of rotation in order to obtain an absolute angular reference of the angular position of the pneumatic tyre 4 around the axis 6 of rotation.

The application system 1 comprises an applicator unit 9 of the sealing agent 2 that deposits a strip of sealing agent 2 upon the inner surface 3 of the pneumatic tyre 4. The applicator unit 9 comprises a dispensing head 10, wherefrom a strip of sealing agent 2 is dispensed that is deposited upon the inner surface 3 of the pneumatic tyre 4, and a movement device 11 (for example, a robotic arm) which supports and moves the dispensing head 10: at the beginning and at the end of the application, the movement device 11 moves the dispensing head 10, respectively, inside the pneumatic tyre 4 and outside the pneumatic tyre 4, whilst, during the application, the movement device 11 moves the dispensing head 10 axially (i.e., parallel to the axis 6 of rotation) from one side of the pneumatic tyre 4 to the opposite side of the pneumatic tyre 4 in order to deposit upon the inner surface 3 a uniform layer of sealing agent 2 that covers the inner surface 3 itself.

According to a preferred embodiment, the movement device 11 holds the dispensing head 10 still during the application of the sealing agent 2 and axially only moves the dispensing head 10 between the end of the application of a strip of sealing agent and the beginning of the application of the next and adjacent strip of sealing agent; in other words, a plurality of circular strips of sealing agent 2 that are independent of each other and arranged side by side. According to an alternative embodiment, the movement device 11 axially and continuously moves the dispensing head 10 in order to deposit a single continuous strip (i.e., seamless) of sealing agent 2 having a helical shape.

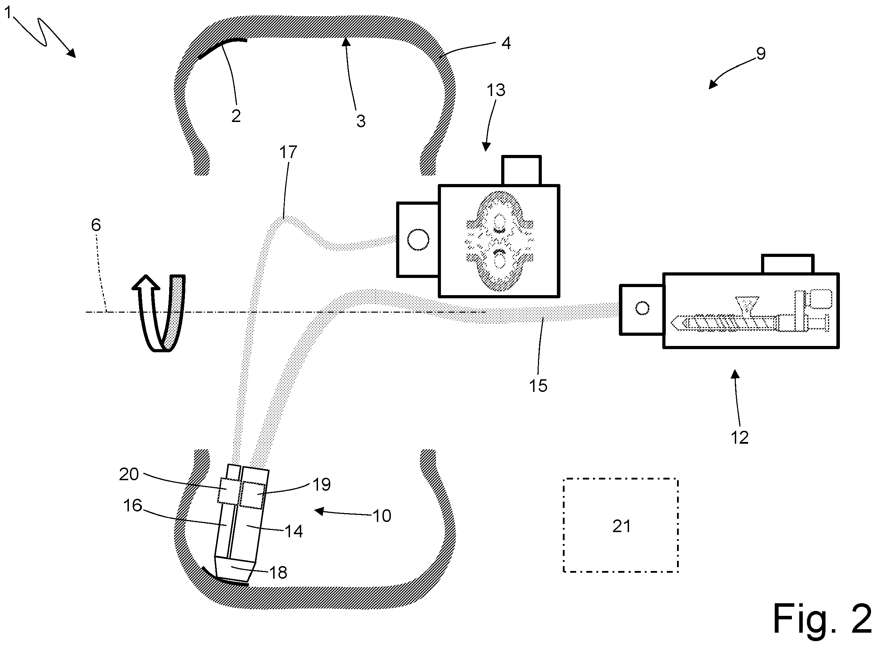

As illustrated in Figure 2, the applicator unit 9 comprises a main extrusion device 12 and an additional extrusion device 13 which has a lower nominal sealing agent 2 flow rate compared to the main extrusion device 12 and lower dispensing inertia compared to the main extrusion device 12; in particular, the additional extrusion device 13 has lower dispensing inertia compared to the main extrusion device 12 due both to the reduced dimensions thereof and the different mode of pumping the sealing agent 2 as will be better described below.

The dispensing head 10 comprises a main tubular body 14 which receives the sealing agent 2 under pressure from the main extruder device 12 by means of a flexible pipe 15 and an additional tubular body 16 which receives the sealing agent 2 under pressure from the extrusion device 13 by means of a flexible pipe 17 (which is totally separate and independent from flexible pipe 15). Within the dispensing head 10, the end portions of the two tubular bodies 14 and 16 tubes are interconnected in such a way as to merge the respective throughputs of sealing agent 2; consequently, the dispensing head 10 comprises a single common outlet nozzle 18 which receives and dispenses a single throughput of sealing agent 2 (produced by the merging of the two throughputs of sealing agent 2 supplied by the two extrusion devices 12 and 13).

According to a preferred, but not binding, embodiment, the main extrusion device 12 comprises a worm screw that, in rotating around the longitudinal axis thereof, pumps the sealing agent 2 towards the dispensing head 10. According to a preferred, but not binding, embodiment, the additional extrusion device 13 comprises a gear pump (reversible) that pumps the sealing agent 2 towards the dispensing head 10.

A flow sensor 19 (mass) is provided that measures the flow rate MF_{MAIN} (mass) of sealing agent 2 that is dispensed by the main extrusion device 12 (only) and that flows through the flexible pipe 15 and then through the main tubular body 14. In the embodiment illustrated in the attached figures, the flow sensor 19 is coupled to the main tubular body 14 upstream of the junction with the additional tubular body 16; in this way, the flow sensor 19 is able to measure the flow rate MF_{MAIN} of sealing agent 2 that is dispensed only by the main extrusion device 12 at a point that is as close as possible to the outlet nozzle 18 (i.e., with the minimum possible delay with respect to the application of the sealing agent 2 to the inner surface 3 of the pneumatic tyre 4).

Similarly, a flow sensor 20 (mass) is provided that measures the flow rate MF_{ADD} (mass) of sealing agent 2 that is dispensed by the additional extrusion device 13 (only) and that flows through the flexible pipe 15 and then through the additional tubular body 16. In the embodiment illustrated in the attached figures, the flow sensor 20 is coupled to the additional tubular body 16 upstream of the junction with the main tubular body 14; in this way, the flow sensor 20 is able to measure the flow rate MF_{ADD} of sealing agent 2 that is dispensed only by the additional extrusion device 13 at a point that is as close as possible to the outlet nozzle 18 (i.e., with the minimum possible delay with respect to the application of the sealing agent 2 to the inner surface 3 of the pneumatic tyre 4).

The application system 1 comprises a control unit 21, which supervises the operation of the same application system 1 and, amongst other things, reads the flow sensors 19 and 20 and controls the activation and deactivation of the extrusion devices 12 and 13.

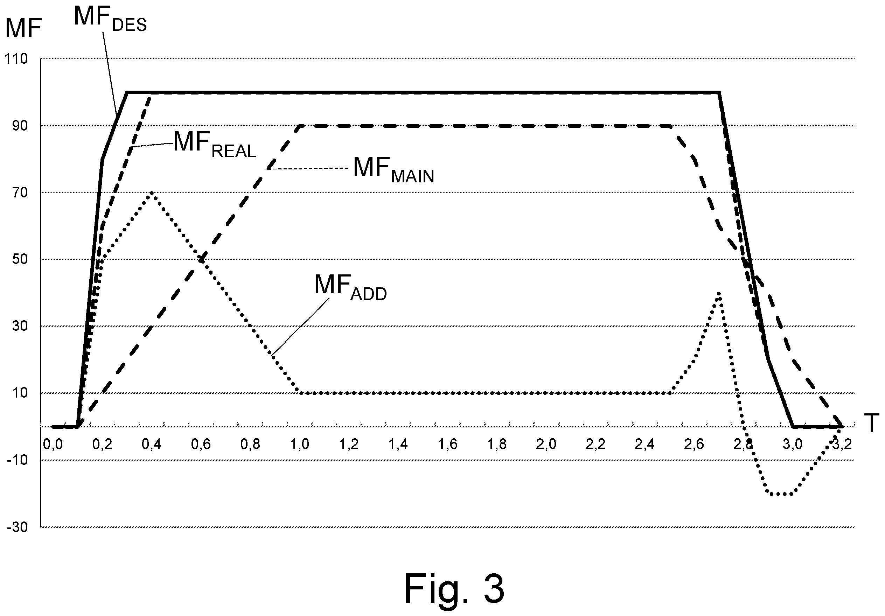

The operation of the applicator unit 9 is described with reference to the graph illustrated in Figure 3.

In Figure 3: the continuous line illustrates the temporal evolution of the desired flow rate MF_{DES} of sealing agent 2 which should be dispensed from the outlet nozzle 18, the coarse dotted line illustrates the temporal evolution of the flow rate MF_{MAIN} of sealing agent 2 that is dispensed by the main extrusion device 12 only and that is measured by the flow sensor 20, the thinner dotted line illustrates the temporal evolution of the flow rate MF_{ADD} of sealing agent 2 that is dispensed by the additional extrusion device 13 only and that is measured by the flow sensor 20, and the dashed line illustrates the temporal evolution of the actual (real) flow rate MF_{REAL} of sealing agent 2 that is dispensed by the outlet nozzle 18 (the sum of the throughput MF_{MAIN} of sealing agent 2 that is dispensed by the main extrusion device 12 and the throughput MF_{ADD} of sealing agent 2 that is dispensed by the additional extrusion device 13).

When the dispensing of the sealing agent 2 begins from the outlet nozzle 18, the control unit 21 activates both of the extrusion devices 12 and 13 in order to attempt to follow, as faithfully as possible, the desired flow rate MF_{DES} of sealing agent 2 (or in order to cancel the flow rate error equal to the difference between the desired flow rate MF_{DES} of sealing agent 2 and the actual flow rate MF_{REAL} of sealing agent 2): initially the flow rates MF_{MAIN} and MF_{ADD} of sealing agent 2 of both of the extrusion devices 12 and 13 are increased at the maximum rate possible (and of course the flow rate MF_{ADD} of sealing agent 2 of the additional extrusion device 13 increases much more quickly than the flow rate MF_{MAIN} of sealing agent 2 of the main extrusion device 12), while subsequently, when the actual flow rate MF_{REAL} of sealing agent 2 reaches the desired flow rate MF_{DES} of sealing agent 2, the flow rate MF_{ADD} of sealing agent 2 of the additional extrusion device 13 is progressively decreased until it reaches a minimum non-zero value (i.e., the additional extrusion device 13 is extremely slowed but never stopped altogether).

In other words, at the beginning of the application of the sealant agent 2 to the inner surface 3 of the pneumatic tyre 4, the ideal application profile (i.e., the desired flow rate MF_{DES} of sealing agent 2) provides that the throughput of sealing agent 2 required is immediately available at the beginning of the application process, however, the inertia of the main extruder device 12 does not allow this (i.e., the flow rate MF_{MAIN} of sealing agent 2 of the main extruder device 12 increases gradually, reaching, with a significant delay, the desired flow rate MF_{DES} of sealing agent 2); during this step the additional extrusion device 13 is driven in such a way as to provide the sealing agent 2 that is missing due to the inertia of the main extrusion device 12. By virtue of this compensation performed by the additional extrusion device 13, the sealing agent 2 is dispensed from the outlet nozzle 18 with a steep ramp that corresponds to the desired flow rate MF_{DES} of sealing agent 2 (i.e., to the ideal application profile).

When the dispensing of the sealing agent 2 from the outlet nozzle 18 ends, the control unit 21 stops the main extrusion device 12, the flow rate MF_{MAIN} whereof of sealing agent 2 is made to continuously and rapidly decrease until it is zero and, at the same time, the control unit 21 drives the additional extrusion device 13 in order to follow the desired flow rate MF_{DES} of sealing agent 2: during this step, the flow rate MF_{ADD} of sealing agent 2 of the additional extrusion device 13 can increase (as initially occurs) or may even decrease until becoming negative (i.e., reversing the direction of advancement of the sealing agent 2). When the flow rate MF_{ADD} of sealing agent 2 of the additional extrusion device 13 is positive, the sealing agent 2 is dispensed from the outlet nozzle 18 (i.e. the flow rate MF_{ADD} of sealing agent 2 of the additional extrusion device 13 is added to the flow rate MF_{MAIN} of sealing agent 2 of the main extrusion device 12), whilst, when the flow rate MF_{ADD} of sealing agent 2 of the additional extrusion device 13 is negative, the sealing agent 2 enters the outlet nozzle 18 (i.e., the flow rate MF_{ADD} of sealing agent 2 of the additional extrusion device 13 is subtracted from the flow rate MF_{MAIN} of sealing agent 2 of the main extrusion device 12).

In other words, at the end of the application of sealing agent 2 to the inner surface 3 of the pneumatic tyre 4, the ideal application profile provides that the throughput of sealing agent 2 stops immediately at the end of the formation of a strip, however, the inertia of the main extrusion device 12 does not allow this; during this step the additional extrusion device 13 is driven such as to dispense the missing sealing agent 2 or to remove the excess sealing agent 2 due to the inertia of the main extrusion device 12. By virtue of to this compensation, performed by the additional extrusion device 13, the dispensing of the sealing agent 2 from the outlet nozzle 18 is interrupted with a steep ramp that corresponds to the desired flow rate MF_{DES} of sealing agent 2 (i.e., to the ideal application profile).

According to a possible embodiment, at the end of the application of the sealing agent 2 to the inner surface 3 of the pneumatic tyre 4 the main extrusion device 12 is stopped in advance and the additional extrusion device 13 can be used both to add the missing sealing agent 2 (i.e., the flow rate MF_{ADD} of sealing agent 2 of the additional extrusion device 13 is positive) and to remove the excess sealing agent 2 (i.e., the flow rate MF_{ADD} of sealing agent 2 of the additional extrusion device 13 is negative).

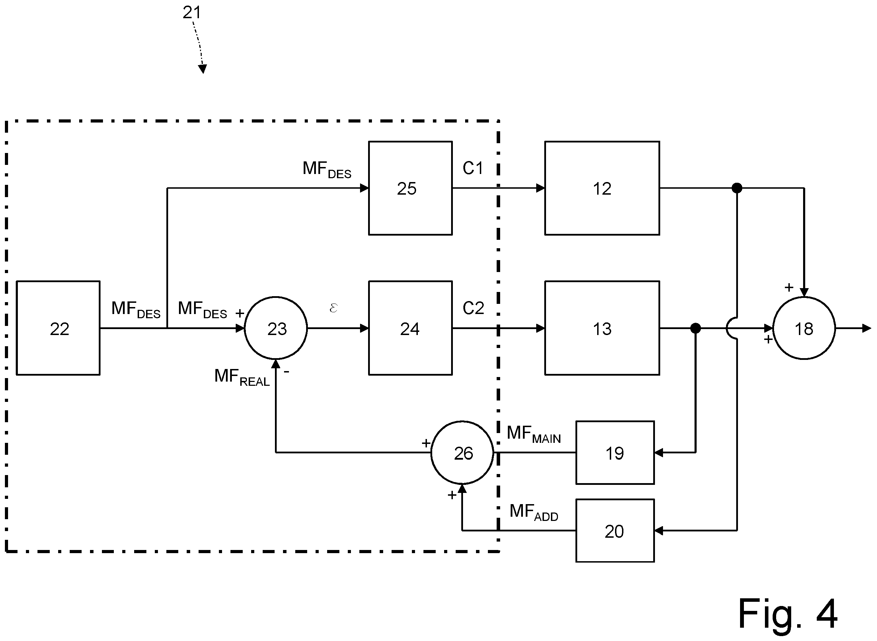

According to a preferred embodiment illustrated in Figure 4, the control unit 21 adjusts the flow rate MF_{MAIN} of sealing agent 2 of the main extrusion device 12 in open-loop mode (i.e., without feedback) as a function of the desired flow rate MF_{DES} of sealing agent 2 and, at the same time, the control unit 21 adjusts the flow rate MF_{ADD} of sealing agent 2 of the additional extrusion device 13 in closed-loop mode (i.e., with feedback) in order to cancel the flow rate error, i.e. the difference between the desired flow rate MF_{DES} of sealing agent 2 and the actual flow rate MF_{REAL} of sealing agent 2. Consequently, the temporal progression of the flow rate MF_{MAIN} of sealing agent 2 of the main extrusion device 12 is reasonably regular and faithfully follows (with a certain delay due to the high inertia of the main extrusion device 12) the progression of the desired flow rate MF_{DES} of sealing agent 2, whilst the temporal progression of the flow rate MF_{ADD} of sealing agent 2 of the additional extrusion device 13 is much more irregular (especially when starting and stopping) in order to compensate for the high inertia of the main extrusion device 12.

In the embodiment illustrated in Figure 4, the control unit 19 comprises a processing block 22 which provides the desired flow rate MF_{DES} of sealing agent 2, a subtraction block 23 which calculates the flow rate error ε in differentiating the difference between the desired flow rate MF_{DES} of sealing agent 2 and actual flow rate MF_{REAL} of sealing agent 2, and a control block 24 (typically a PID controller), which, as a function of the flow rate error ε, determines a control value C2 that is used to drive the additional extrusion device 13.

Furthermore, the control unit 19 comprises a control block 25 which, as a function of the desired flow rate MF_{DES} of sealing agent 2, determines (in open-loop mode) a control value C1 that is used to drive the main extrusion device 12. Generally, the value C1 is determined in such a way as to ensure that the flow rate MF_{MAIN} of sealing agent 2 of the main extrusion device 12 is always slightly less than the desired flow rate MF_{DES} of sealing agent 2 (for example, equal to 90% of the desired flow rate MF_{DES} of sealing agent 2) in such a way that the flow rate MF_{ADD} of sealing agent 2 of the additional extrusion device 13 is never eliminated in a continuous manner, and therefore in such a way that the additional extrusion device 13 is never completely stopped. In fact, in always maintaining in motion (even although slowly) the additional extrusion device 13, the additional extrusion device 13 is more available in the case of a sudden requirement to rapidly vary the flow rate MF_{ADD} thereof of sealing agent 2.

Finally, the control unit 19 comprises an addition block 26 that calculates the actual flow rate MF_{REAL} of sealing agent 2 in adding the flow rate MF_{MAIN} of sealing agent 2 of the main extrusion device 12 (as measured by the flow sensor 19) to the flow rate MF_{ADD} of sealing agent 2 of the additional extrusion device 13 (as measured by the flow sensor 20).

According to a preferred embodiment, in controlling the extrusion devices 12 and 13, measurements are also used that are provided by the respective pressure sensors that determine the pressure of the sealing agent 2 within the same extrusion devices 12 and 13.

The embodiments described herein can be combined with each other without departing from the scope of protection of the present invention.

The application system 1 described above has many advantages.

First, the application system 1 described above allows for the very rapid beginning and ending of the dispensing of sealing agent 2 from the outlet nozzle 18 in compensating for the high inertia of the main extrusion device 12 by virtue of intervention of the additional extrusion device 13.

In other words, in order to overcome the inertia of the main extrusion device 12 during start-ups and shutdowns, the additional extrusion device 13, of a (relatively) reduced capacity and low inertia, intervenes when necessary; i.e., the application system 1 described above overcomes the limitations imposed by the high dispensing inertia of the main extrusion device 12 in coupling to the same main extrusion device 12 the additional extrusion device 13 having a (relatively) reduced capacity, high speed and low inertia.

The ability to rapidly start and stop the extrusion process (i.e., the dispensing of sealing agent 2 from the outlet nozzle 18) increases the flexibility of the application system 1 which is able to manufacture application models that can greatly enhance the uniformity of the layer of sealing agent 2 (and therefore the performance of the pneumatic tyre 4, especially at high speed).

Furthermore, the application system 1 described above is simple and inexpensive to manufacture insofar as it requires the addition of only a few parts that are readily available commercially.

### LIST OF REFERENCE NUMBERS IN THE FIGURES

- 1: application system
- 2: sealing agent
- 3: inner surface
- 4: pneumatic tyre
- 5: support device
- 6: axis of rotation
- 7: position sensor
- 8: camera
- 9: applicator unit
- 10: dispensing head
- 11: movement device
- 12: main extrusion device
- 13: additional extrusion device
- 14: main tubular body
- 15: flexible pipe
- 16: additional tubular body
- 17: flexible pipe
- 18: outlet nozzle
- 19: flow sensor
- 20: flow sensor
- 21: control unit
- 22: processing block
- 23: subtraction block
- 24: control block
- 25: control block
- 26: addition block

## Claims

1. - Application system (1) for applying a sealing agent (2) to the inner surface (3) of a pneumatic tyre (4); the application system (1) comprises:
a support device (5) suitable for rotating the pneumatic tyre (4) around an axis (6) of rotation;
a dispensing head (10) that is suitable for being arranged inside the pneumatic tyre (4) in order to apply a layer of sealing agent (2) to the inner surface (3) of the pneumatic tyre (4) itself; and
a main extrusion device (12), which is connected to the dispensing head (10) and that is suitable for supplying the dispensing head (10) itself with a first throughput of sealing agent (2); wherein
the application system (1) comprises an additional extrusion device (13), which is connected to the dispensing head (10), is separate and independent from the main extrusion device (12), and is suitable for supplying the dispensing head (10) itself with a second throughput of sealing agent (2) that merges with the first throughput of sealing agent (2).

2. Application system (1) according to claim 1, wherein the additional extrusion device (13) has a nominal flow rate of sealing agent (2) and a dispensing inertia that are lower than a nominal flow rate of sealing agent (2) and a dispensing inertia of the main extrusion device (12).

3. Application system (1) according to claim 1 or 2, wherein the dispensing head (10) comprises a single common outlet nozzle (18) wherefrom a single throughput of sealing agent (2) emerges formed from the merging of the first throughput of sealing agent (2) with the second throughput of sealing agent (2).

4. Application system (1) according to claim 1, 2 or 3, wherein:
the dispensing head (10) comprises: a main tubular body (14) which receives the sealing agent (2) under pressure from the main extruder device (12) by means of a first pipe (15); and an additional tubular body (16) which receives the sealing agent (2) under pressure from the extrusion device (13) device by means of a second pipe (17); and
the end parts of the two tubular bodies (14, 16) are interconnected in such a way as to merge together the respective throughputs of sealing agent (2).

5. Application system (1) according to one of the claims 1 to 4, wherein the additional extrusion device (13) comprises a gear pump that pumps the sealing agent (2) towards the dispensing head (10).

6. Application system (1) according to one of the claims 1 to 5 and comprising:
a first flow sensor (19) that measures the flow rate (MF_{MAIN}) of the first throughput of sealing agent (2) that is dispensed by the main extrusion device (12); and
a second flow sensor (20) that measures the flow rate (MF_{ADD}) of the second throughput of sealing agent (2) that is dispensed by the additional extrusion device (13).

7. Application system (1) according to one of the claims 1 to 6 and comprising a control unit (21), which drives in a coordinated manner the two extrusion devices (12, 13) in such a way that the sum of the flow rate (MF_{MAIN}) of the first throughput of sealing agent (2) and the flow rate (MF_{ADD}) of the second throughput of sealing agent (2) is equal moment by moment to a desired flow rate (MF_{DES}) of sealing agent (2).

8. Application system (1) according to claim 7, wherein the control unit (21) drives the additional extrusion device (13) in order to supply the sealing agent (2) that is missing in relation to the desired flow rate (MF_{DES}) of sealing agent (2).

9. Application system (1) according to claim 7 or 8, wherein, when the dispensing of the sealing agent (2) from the dispensing head (10) begins, the control unit (21):
initially increases the flow rates (MF_{MAIN}, MF_{ADD}) of sealing agent (2) of both extrusion devices (12, 13) at the maximum rate possible; and
subsequently, when the actual flow rate (MF_{REAL}) of sealing agent (2) reaches the desired flow rate (MF_{DES}) of sealing agent (2), the flow rate (MF_{ADD}) of sealing agent (2) of the additional extrusion device (13) is progressively decreased until it reaches a minimum non-zero value.

10. Application system (1) according to claim 7, 8 or 9, wherein, when the dispensing of sealing agent (2) from the dispensing head (10) ends, the control unit (21) stops the main extrusion device (12) in advance and drives the additional extrusion device (13) in order to add the missing sealing agent (2) or in order to remove the excess sealing agent (2).

11. Application system (1) according to one of claims 7 to 10, wherein the control unit (21) drives the flow rate (MF_{MAIN}) of the first throughput of sealing agent (2) of the main extrusion device (12) in open-loop mode as a function of the desired flow rate (MF_{DES}) of sealing agent (2) and, at the same time, the control unit (21) drives the flow rate (MF_{ADD}) of the second throughput of sealing agent (2) of the additional extrusion device (13) in closed-loop mode in order to cancel a flow rate error comprising the difference between the desired flow rate (MF_{DES}) of sealing agent (2) and an actual flow rate (MF_{REAL}) of sealing agent (2) .

12. Application system (1) according to one of claims 7 to 11, wherein the control unit (21) drives the main extrusion device (12) in such a way that the flow rate (MF_{MAIN}) of the first throughput of sealing agent (2) is always less than the desired flow rate (MF_{DES}) of sealing agent (2), therefore in such a way that the flow rate (MF_{ADD}) of the second throughput of sealing agent (2) is never canceled in a continuous manner, and therefore in such a way that the additional extrusion device (13) is never completely stopped.

13. Application system (1) according to claim 12, wherein the control unit (21) drives the main extrusion device (12) in such a way that the flow rate (MF_{MAIN}) of the first throughput of sealing agent (2) is always 900 less than the desired flow rate (MF_{DES}) of sealing agent (2).

14. Application method for applying a sealing agent (2) to the inner surface (3) of a pneumatic tyre (4); the application method comprises the steps of:
rotating, by means of a support device (5), the pneumatic tyre (4) around an axis (6) of rotation;
applying a layer of sealing agent (2) to the inner surface (3) of the pneumatic tyre (4) by means of a dispensing head (10) arranged within the pneumatic tyre (4) itself; and
supplying the dispensing head (10), by means of a main extrusion device (12), with a first throughput of sealing agent (2); wherein
the application method comprises the additional step of supplying the dispensing head (10), by means of an additional extrusion device (13) that is separate and independent from the main extrusion device (12), with a second throughput of sealing agent (2) that merges with the first throughput of sealing agent (2).

## Patentansprüche

1. Applikationssystem (1) zum Aufbringen eines Dichtmittels (2) auf die Innenfläche (3) eines Luftreifens (4); wobei das Applikationssystem (1) umfasst:
eine Stützvorrichtung (5), die zum Drehen des Luftreifens (4) um eine Achse (6) der Drehung geeignet ist;
einen Abgabekopf (10), der zum Anordnen innerhalb des Luftreifens (4) geeignet ist, um eine Schicht eines Dichtmittels (2) auf die Innenfläche (3) des Luftreifens (4) selbst aufzubringen; und
eine Hauptextrusionsvorrichtung (12), die mit dem
Abgabekopf (10)verbunden und zum Versorgen des Abgabekopfs (10) selbst mit einem ersten Durchsatz des Dichtmittels (2) geeignet ist; wobei
das Applikationssystem (1) eine zusätzliche Extrusionsvorrichtung (13) umfasst, die mit dem Abgabekopf (10) verbunden ist, von der Hauptextrusionsvorrichtung (12) getrennt und unabhängig ist und zum Versorgen des Abgabekopfs (10) selbst mit einem zweiten Durchsatz des Dichtmittels (2) geeignet ist, der sich mit dem ersten Durchsatz des Dichtmittels (2) vereint.

2. Applikationssystem (1) gemäß Anspruch 1, wobei die zusätzliche Extrusionsvorrichtung (13) eine Nenndurchflussmenge des Dichtmittels (2) und eine Abgabeträgheit aufweist, die niedriger als eine Nenndurchflussmenge des Dichtmittels (2) und eine Abgabeträgheit der Hauptextrusionsvorrichtung (12) sind.

3. Applikationssystem (1) gemäß Anspruch 1 oder 2, wobei der Abgabekopf (10) eine einzige gemeinsame Auslassdüse (18) umfasst, aus der ein einziger Durchsatz des Dichtmittels (2) austritt, der aus dem Zusammenführen des ersten Durchsatzes des Dichtmittels (2) mit dem zweiten Durchsatz des Dichtmittels (2) gebildet ist.

4. Applikationssystem (1) gemäß Anspruch 1, 2 oder 3, wobei
der Abgabekopf (10) umfasst: einen röhrenförmigen Hauptkörper (14), der das Dichtmittel (2) unter Druck von der Hauptextrudervorrichtung (12) mittels eines ersten Rohres (15) aufnimmt; und einen zusätzlichen röhrenförmigen Körper (16), der das Dichtmittel (2) unter Druck aus der Extrusionsvorrichtung (13) mittels eines zweiten Rohres (17) aufnimmt; und
die Endteile der röhrenförmigen Körper (14, 16) so miteinander verbunden sind, dass die jeweiligen Durchsätze des Dichtmittels (2) miteinander kombiniert werden.

5. Applikationssystem (1) gemäß einem der Ansprüche 1 bis 4, wobei die zusätzliche Extrusionsvorrichtung (13) eine Zahnradpumpe umfasst, die das Dichtmittel (2) zum Abgabekopf (10) pumpt.

6. Applikationssystem (1) gemäß einem der Ansprüche 1 bis 5 und umfassend:
einen ersten Durchflusssensor (19), der die Durchflussmenge (MF_{MAIN}) des ersten Durchsatzes des Dichtmittels (2) misst, das durch die Hauptextrusionsvorrichtung (12) abgegeben wird; und
einen zweiten Durchflusssensor (20), der die Durchflussmenge (MF_{ADD}) des zweiten Durchsatzes des Dichtmittels (2) misst, das durch die zusätzliche Extrusionsvorrichtung (13) abgegeben wird.

7. Anwendung des Systems (1) gemäß einem der Ansprüche 1 bis 6 und umfassend eine Steuereinheit (21), die in einer koordinierten Weise die beiden Extrusionsvorrichtungen (12, 13) so ansteuert, dass die Summe der Durchflussmenge (MF_{MAIN}) des ersten Durchsatzes des Dichtmittels (2) und die Durchflussmenge (MF_{ADD}) des zweiten Durchsatzes des Dichtmittels (2) Augenblick für Augenblick gleich einer gewünschten Durchflussmenge (MF_{DES}) des Dichtmittels (2) ist.

8. Applikationssystem (1) gemäß Anspruch 7, wobei die Steuereinheit (21) die zusätzliche Extrusionsvorrichtung (13) zum Zuführen des Dichtmittels (2) ansteuert, das in Bezug auf die gewünschte Durchflussmenge (MF_{DES}) des Dichtmittels (2) fehlt.

9. Applikationssystem (1) gemäß Anspruch 7 oder 8, wobei, wenn das Abgeben des Dichtmittels (2) aus dem Abgabekopf (10) beginnt, die Steuereinheit (21):
anfänglich die Durchflussmengen (MF_{MAIN}, MF_{ADD}) des Dichtmittels (2) der beiden Extrusionsvorrichtungen (12, 13) auf die maximal mögliche Menge erhöht; und
anschließend, wenn die Ist-Durchflussmenge (MF_{REAL}) des Dichtmittels (2) die gewünschte Durchflussmenge (MF_{DES}) des Dichtmittels (2) erreicht, die Durchflussmenge (MF_{ADD}) des Dichtmittels (2) der zusätzlichen Extrusionsvorrichtung (13) schrittweise verringert, bis sie einen von null verschiedenen Mindestwert erreicht.

10. Applikationssystem (1) gemäß Anspruch 7, 8 oder 9, wobei, wenn das Abgeben des Dichtmittels (2) aus dem Abgabekopf (10) endet, die Steuereinheit (21) die Hauptextrusionsvorrichtung (12) im Voraus stoppt und die zusätzliche Extrusionsvorrichtung (13) zum Hinzufügen des fehlenden Dichtmittels (2) oder Entfernen des überschüssigen Dichtmittels (2) ansteuert.

11. Applikationssystem (1) gemäß einem der Ansprüche 7 bis 10, wobei die Steuereinheit (21) die Durchflussmenge (MF_{MAIN}) des ersten Durchsatzes des Dichtmittels (2) der Hauptextrusionsvorrichtung (12) im Steuerungsmodus in Abhängigkeit von der gewünschten Durchflussmenge (MF_{DES}) des Dichtmittels (2) steuert und gleichzeitig die Steuereinheit (21) die Durchflussmenge (MF_{ADD}) des zweiten Durchsatzes des Dichtmittels (2) der zusätzlichen Extrusionsvorrichtung (13) im Regelungsmodus steuert, um einen Durchflussmengenfehler zu löschen, der die Differenz zwischen der gewünschten Durchflussmenge (MF_{DES}) des Dichtmittels (2) und einer Ist-Durchflussmenge (MF_{REAL}) des Dichtmittels (2) umfasst.

12. Applikationssystem (1) gemäß einem der Ansprüche 7 bis 11, wobei die Steuereinheit (21) die Hauptextrusionsvorrichtung (12) so ansteuert, dass die Durchflussmenge (MF_{MAIN}) des ersten Durchsatzes des Dichtmittels (2) stets kleiner als die gewünschte Durchflussmenge (MF_{DES}) des Dichtmittels (2) ist, d. h. derart, dass die Durchflussmenge (MF_{ADD}) des zweiten Durchsatzes des Dichtmittels (2) keinesfalls in einer kontinuierlichen Weise aufgehoben wird, also so, dass die zusätzliche Extrusionsvorrichtung (13) keinesfalls vollständig gestoppt wird.

13. Applikationssystem (1) gemäß Anspruch 12, wobei die Steuereinheit (21) die Hauptextrusionsvorrichtung (12) so ansteuert, dass die
Durchflussmenge (MF_{MAIN}) des ersten Durchsatzes des Dichtmittels (2) stets 90 % geringer als die gewünschte Durchflussmenge (MF_{DES}) des Dichtmittels (2) ist.

14. Applikationsverfahren zum Aufbringen eines Dichtmittels (2) auf die Innenfläche (3) eines Luftreifens (4); wobei das Applikationsverfahren die Schritte umfasst:
Drehen, mittels einer Stützvorrichtung (5), des Luftreifens (4) um eine Achse (6) der Drehung;
Aufbringen einer Schicht des Dichtmittels (2) auf die Innenfläche (3) des Luftreifens (4) mittels eines Abgabekopfs (10), der innerhalb des Luftreifens (4) selbst angeordnet ist; und
Versorgen des Abgabekopfs (10), mittels einer
Hauptextrusionsvorrichtung (12), mit einem ersten Durchsatz des Dichtmittels (2); wobei
das Applikationsverfahren den zusätzlichen Schritt des Versorgens des Abgabekopfs (10), mittels einer zusätzlichen Extrusionsvorrichtung (13), die von der Hauptextrusionsvorrichtung (12) getrennt und unabhängig ist, mit einem zweiten Durchsatz des Dichtmittels (2) umfasst, der mit dem ersten Durchsatz des Dichtmittels (2) zusammengeführt wird.

## Revendications

1. Système d'application (1) pour appliquer un agent d'étanchéité (2) sur la surface intérieure (3) d'un pneumatique (4) ; le système d'application (1) comprend :
un dispositif de support (5) approprié pour mettre en rotation le pneumatique (4) autour d'un axe (6) de rotation ;
une tête de distribution (10) qui est appropriée pour être agencée à l'intérieur du pneumatique (4) afin d'appliquer une couche d'agent d'étanchéité (2) sur la surface intérieure (3) du pneumatique (4) lui-même ; et
un dispositif d'extrusion principal (12), qui est connecté à la tête de distribution (10) et qui est approprié pour alimenter la tête de distribution (10) elle-même avec un premier débit d'agent d'étanchéité (2) ; dans lequel
le système d'application (1) comprend un dispositif d'extrusion supplémentaire (13), qui est connecté à la tête de distribution (10), est séparé et indépendant du dispositif d'extrusion principal (12), et est approprié pour alimenter la tête de distribution (10) elle-même avec un second débit d'agent d'étanchéité (2) qui fusionne avec le premier débit d'agent d'étanchéité (2).

2. Système d'application (1) selon la revendication 1, dans lequel le dispositif d'extrusion supplémentaire (13) a une vitesse d'écoulement nominale d'agent d'étanchéité (2) et une inertie de distribution qui sont inférieures à une vitesse d'écoulement nominale d'agent d'étanchéité (2) et une inertie de distribution du dispositif d'extrusion principal (12).

3. Système d'application (1) selon la revendication 1 ou 2, dans lequel la tête de distribution (10) comprend une unique buse de sortie commune (18) à partir de laquelle un unique débit d'agent d'étanchéité (2) émerge formé à partir de la fusion du premier débit d'agent d'étanchéité (2) avec le second débit d'agent d'étanchéité (2).

4. Système d'application (1) selon la revendication 1, 2 ou 3, dans lequel :
la tête de distribution (10) comprend : un corps tubulaire principal (14) qui reçoit l'agent d'étanchéité (2) sous pression en provenance du dispositif d'extrudeuse principal (12) au moyen d'un premier tuyau (15) ; et un corps tubulaire supplémentaire (16) qui reçoit l'agent d'étanchéité (2) sous pression en provenance du dispositif dispositif d'extrusion (13) au moyen d'un second tuyau (17) ; et
les parties extrémité des deux corps tubulaires (14, 16) sont interconnectées de manière à fusionner les débits respectifs d'agent d'étanchéité (2).

5. Système d'application (1) selon l'une des revendications 1 à 4, dans lequel le dispositif d'extrusion supplémentaire (13) comprend une pompe à engrenages qui pompe l'agent d'étanchéité (2) vers la tête de distribution (10).

6. Système d'application (1) selon l'une des revendications 1 à 5 et comprenant :
un premier capteur d'écoulement (19) qui mesure la vitesse d'écoulement (MF_{MAIN}) du premier débit d'agent d'étanchéité (2) qui est distribué par le dispositif d'extrusion principal (12) ; et
un second capteur d'écoulement (20) qui mesure la vitesse d'écoulement (MF_{ADD}) du second débit d'agent d'étanchéité (2) qui est distribué par le dispositif d'extrusion supplémentaire (13).

7. Application de système (1) selon l'une des revendications 1 à 6 et comprenant une unité de commande (21), qui pilote de manière coordonnée les deux dispositifs d'extrusion (12, 13) de telle sorte que la somme de la vitesse d'écoulement (MF_{MAIN}) du premier débit d'agent d'étanchéité (2) et de la vitesse d'écoulement (MF_{ADD}) du second débit d'agent d'étanchéité (2) est égale moment par moment à une vitesse d'écoulement souhaitée (MF_{DES}) d'agent d'étanchéité (2).

8. Système d'application (1) selon la revendication 7, dans lequel l'unité de commande (21) pilote le dispositif d'extrusion supplémentaire (13) afin d'alimenter l'agent d'étanchéité (2) qui manque par rapport à la vitesse d'écoulement souhaitée (MF_{DES}) d'agent d'étanchéité (2).

9. Système d'application (1) selon la revendication 7 ou 8, dans lequel, lorsque la distribution de l'agent d'étanchéité (2) à partir de la tête de distribution (10) débute, l'unité de commande (21) :
augmente initialement les vitesses d'écoulement (MF_{MAIN}, MF_{ADD}) d'agent d'étanchéité (2) des deux dispositifs d'extrusion (12, 13) à la vitesse maximale possible ; et
par la suite, lorsque la vitesse d'écoulement réelle (MF_{REAL}) d'agent d'étanchéité (2) atteint la vitesse d'écoulement souhaitée (MF_{DES}) d'agent d'étanchéité (2), la vitesse d'écoulement (MF_{ADD}) d'agent d'étanchéité (2) du dispositif d'extrusion supplémentaire (13) est progressivement diminuée jusqu'à atteindre une valeur minimale non nulle.

10. Système d'application (1) selon la revendication 7, 8 ou 9, dans lequel, lorsque la distribution d'agent d'étanchéité (2) à partir de la tête de distribution (10) se termine, l'unité de commande (21) arrête le dispositif d'extrusion principal (12) à l'avance et pilote le dispositif d'extrusion supplémentaire (13) afin d'ajouter l'agent d'étanchéité manquant (2) ou afin d'éliminer l'excès d'agent d'étanchéité (2).

11. Système d'application (1) selon l'une des revendications 7 à 10, dans lequel l'unité de commande (21) pilote la vitesse d'écoulement (MF_{MAIN}) du premier débit d'agent d'étanchéité (2) du dispositif d'extrusion principal (12) en mode boucle ouverte en fonction de la vitesse d'écoulement souhaitée (MF_{DES}) d'agent d'étanchéité (2) et, en même temps, l'unité de commande (21) pilote la vitesse d'écoulement (MF_{ADD}) du second débit d'agent d'étanchéité (2) du dispositif d'extrusion supplémentaire (13) en mode boucle fermée afin d'annuler une erreur de vitesse d'écoulement comprenant la différence entre la vitesse d'écoulement souhaitée (MF_{DES}) d'agent d'étanchéité (2) et une vitesse d'écoulement réelle (MF_{REAL}) d'agent d'étanchéité (2).

12. Système d'application (1) selon l'une des revendications 7 à 11, dans lequel l'unité de commande (21) pilote le dispositif d'extrusion principal (12) de telle sorte que la vitesse d'écoulement (MF_{MAIN}) du premier débit d'agent d'étanchéité (2) est toujours inférieure à la vitesse d'écoulement souhaitée (MF_{DES}) d'agent d'étanchéité (2), donc de telle sorte que la vitesse d'écoulement (MF_{ADD}) du second débit d'agent d'étanchéité (2) n'est jamais annulée de manière continue, et donc de telle sorte que le dispositif d'extrusion supplémentaire (13) n'est jamais complètement arrêté.

13. Système d'application (1) selon la revendication 12, dans lequel l'unité de commande (21) pilote le dispositif d'extrusion principal (12) de telle sorte que la vitesse d'écoulement (MF_{MAIN}) du premier débit d'agent d'étanchéité (2) est toujours 90 % inférieure à la vitesse d'écoulement souhaitée (MF_{DES}) d'agent d'étanchéité (2).

14. Procédé d'application pour appliquer un agent d'étanchéité (2) sur la surface intérieure (3) d'un pneumatique (4) ; le procédé d'application comprend les étapes consistant à :
mettre en rotation, au moyen d'un dispositif de support (5), le pneumatique (4) autour d'un axe (6) de rotation ;
appliquer une couche d'agent d'étanchéité (2) sur la surface intérieure (3) du pneumatique (4) au moyen d'une tête de distribution (10) agencée dans le pneumatique (4) lui-même ; et
alimenter la tête de distribution (10), au moyen d'un dispositif d'extrusion principal (12), avec un premier débit d'agent d'étanchéité (2) ; dans lequel
le procédé d'application comprend l'étape supplémentaire consistant à alimenter la tête de distribution (10), au moyen d'un dispositif d'extrusion supplémentaire (13) qui est séparé et indépendant du dispositif d'extrusion principal (12), avec un second débit d'agent d'étanchéité (2) qui fusionne avec le premier débit d'agent d'étanchéité (2).
